# EUROPEAN PATENT APPLICATION

(11) **EP 1 437 270 A1**
(43) Date of publication of application: **14.07.2004**
(21) Application number: 03380088.9
(22) Date of filing: 07.04.2003
(51) Int. Cl.: B60R 25/00, G08G 1/017

(54) **System and method for vehicle identification**

(30) Priority: 11.01.2003 ES 200300067
(71) Applicant: Grupo MSG 2000, S.A., 28043 Madrid (ES)
(72) Inventor: Samblas Garcia, Jose, 28043 Madrid (ES)

(57) **Abstract**

System and method for vehicle identification. A vehicle (3) has support means to carry a first identification code (ID1) and a second identification code (ID2). The first identification code is visible and can be, for example, the vehicle license number displayed within the vehicle's license plate (1). The second identification code is non-visible and can be, for example, stored electronically or magnetically within a card on the vehicle (2). Storage means (7) store the first and second identification codes of at least said vehicle. Both identification codes are read at a identification station (IS1,IS2,ISn), as the vehicle approaches to or passes by it, by means of readers (4,5) adapted to obtain them from the information stored on their supports. Processing means (PROC,CP) then compare the obtained first and second identification codes with the ones stored in the storage means. An alarm can be triggered in case they do not match.

## Description

### FIELD OF THE INVENTION

The present invention relates to traffic control system for road vehicles and, more precisely, with the identification of said vehicles.

### BACKGROUND

A vehicle identification system can comprise an identification station having a suitable reader arranged to obtain an identifier of a vehicle, and a processor having processing means arranged to communicate with said reader and to perform subsequent actions; wherein, according to different implementations, the reader and the processor can be co-located within a single computer arrangement, or be discrete communicating devices. The subsequent actions depends on the specific functions the identification system is intended for.

For example, the system can just log data related to the pass of a vehicle, and use them for various purposes, such as: automatic toll ticketing in a motorway, to determine if a vehicle is still in a given area controlled by the system, such as a controlled parking, etc..
Additionally or alternatively, a vehicle identification system can be arranged to, based on an acquired identifier, identify a target vehicle by comparing the obtained identifier with a list of stored target identifiers; thus automatically allowing/denying the access of a vehicle to a given area, or automatically detecting an stolen vehicle.

Among others, a well-known technique for automatically obtaining an identifier of a vehicle in a state-of-the-art vehicle identification system, in a format suitable to be further processed, consist on taking a picture that contains a visible identification code of the vehicle (e.g.: a picture of its license plate) and then, for example, utilizing OCR (Optical Character Recognition) means, obtain a digitized representation of said code. Thus, a stolen car passing by an identification station can be detected by comparing the obtained license code with the list of stored license codes of stolen cars.

However, it can take some time since a car is stolen, until this information is populated into the appropriate databases. Besides, the visible identification code of a target vehicle (e.g.: a stolen vehicle) can be partially altered or totally changed; thus weaken the usage of the acquisition of said kind of identifier.

### SUMMARY OF THE INVENTION

It is an object of the present invention to reinforce the authentication capabilities of a vehicle identification system.

According to a first aspect of the invention, it is provided a system for the identification of a vehicle. The system comprises: a first and a second identification readers, each arranged to, respectively, obtain a visible first identification code and a non-visible second identification code carried by the vehicle; storage means, arranged to store the legitimate first and second identification codes of said vehicle; and processing means to compare the obtained identification codes with the stored identification codes.

According to an embodiment, the first identification reader is arranged to obtain an image of the vehicle that comprises, at least, the support means on said vehicle which displays said visible first identification code; and the system further comprises an optical character recognizer that allows to obtain said identification code from said image.

According to an embodiment, the non-visible second identification code is contained in support means on said vehicle which comprise a transmitter arranged to modulate an electromagnetic signal according to said second identification code, so as said signal contains information of said second identification code, and the second identification reader comprise a receiver arranged to receive said signal and to obtain said second identification code from it.

According to an embodiment, the system further comprises: a central processor, a database accessible to said central processor and arranged to store the legitimate first and second identification codes of a vehicle, and a plurality of identification stations. Each identification station has: a first and a second identification reader as described previously, and a local processor connected to said first and second identification readers in the station, and further connected to said central processor. In this embodiment, the aforementioned processing means are distributed between the central processor and the plurality of local processors. Local processing means on each local processor, are arranged to communicate with the first and second identification readers in order to obtain, respectively, a first and a second identification code, and further send a message to the central processor which contains data of said codes. Central processing means on the central processor are in turn arranged to receive said message and further access to the database to compare the data stored with the data received related to said codes.
According to a further embodiment, the message sent to the central processor can contain an identifier of the sending identification station and/or geographical information of said identification station.
According to a further embodiment, the central processing means in the central processor are further arranged to send a response message to the sending identification station which contains the result of the comparison.

According to another embodiment, the processing means are further arranged to produce an alarm depending of the result of the comparison.

According to a second aspect of the invention, it is provided a method to identify a vehicle; said vehicle carrying a visible first identification code and a non-visible second identification code. In an early step, the legitimate first and second identification codes of said vehicle are stored. In further steps, when said vehicle passes near an identification station, the first and second identification codes it carries are read. The obtained identification codes are then compared with the one stored related to the vehicle.

According to an embodiment, the obtainment of the visible identification code comprises the steps of obtaining an image of the vehicle, and obtaining said code by optical character recognition on said image.

According to an embodiment, the obtainment of the non-visible identification code comprises the steps of receiving an electromagnetic signal which contains information of said code emitted from said vehicle, and obtaining said code from said signal.

According to an embodiment, the method further comprises the step of generating an alarm if the obtained identification codes does not mach the ones stored.

The system and method according to the invention provide the advantage of detecting if a visible identification code carried on a vehicle corresponds to the one legally assigned to said vehicle, or has been changed or modified. Furthermore, advantages provided by other well-known systems and methods which permit, among other: detection stolen vehicles, identification of their owners, recording of information, automatic toll ticketing, automatic pass control, etc., based on the acquisition of one identifier of a vehicle; can also be obtained, wherein the identification of the vehicle is reinforced by the system and method of the invention, as two identifiers carried in the vehicle, a first one visible and a second one non-visible, are read.

### BRIEF DESCRIPTION OF DRAWINGS

Figure 1 shows an schematic view of a vehicle and an identification system according to the invention.

Figure 2 shows a schematic view of a plurality of identification stations in an identification system according to the invention.

### DETAILED DESCRIPTION

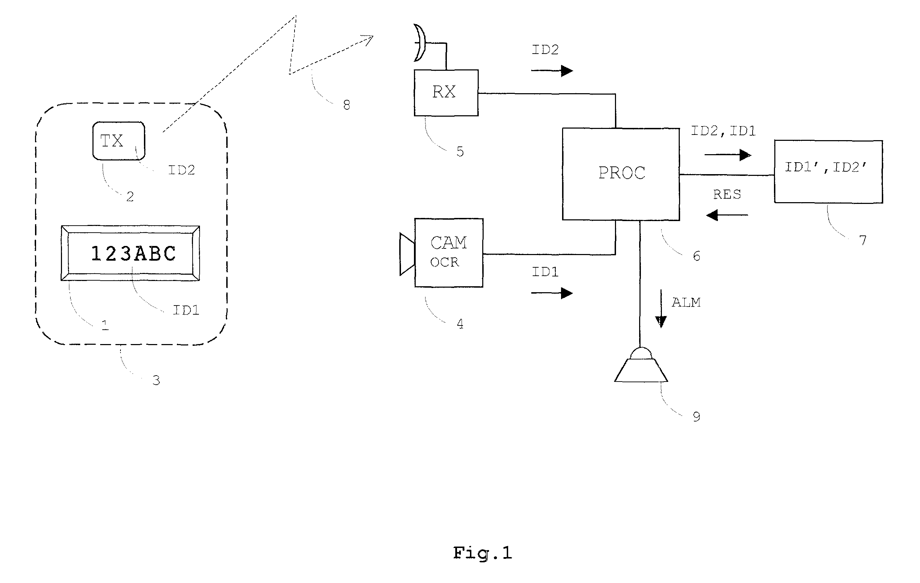

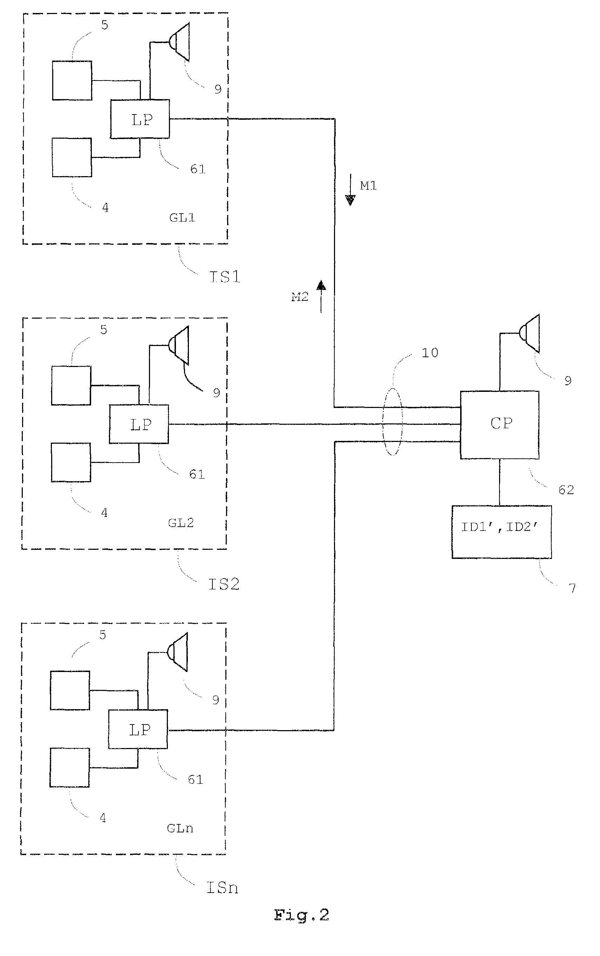

The elements of a vehicle identification system according to the invention, as well as its overall operation, shall hereinafter be described with reference to figures 1 and 2.

The vehicle identification system, as displayed in Fig.1 comprises: a first reader (4), a second reader (5), a processor (6), a data storage (7) and an output device (9).

These elements shall be understood to be functional elements, thus not related nor compelling any specific physical architecture. Namely, depending on various alternative implementations, all these elements can be allocated within a computer arrangement, said computer arrangement having processing means, storage means and I/O (input/output) devices arranged to obtain and/or produce data; also, some of these elements can be grouped within a computer arrangement, while other elements are accomplished by discrete elements allocated respectively in other computer arrangement(s)/device(s); also, all these functional elements can be accomplished by discrete computer arrangements/devices arranged to perform their specific functions and to communicate with other computer arrangement(s)/device(s).
Said functional elements can, in turn, comprise further sub-elements implemented by means of software, hardware or combination thereof, to accomplish with their respective operation, that, for the sake of a greater simplicity, are not shown in Fig.1.

The vehicle (3) is provided with a first support (1) that displays a visible identification code (ID1) of said vehicle. The support (1) can be, for example, a license plate displaying an alphanumeric sequence of a vehicle's license code (123ABC). The support (1) can be also a visible tag fixed to the vehicle, or even comprise a part of the exterior of the vehicle that displays a visible code.
The visible identification code is not necessarily limited to be a vehicle's license number; it can be, for example, the identification code of a vehicle within a vehicle fleet. Similarly, the representation of said visible identification code is not necessarily limited to a sequence of alphanumeric characters; namely, it can be represented in any other suitable visible format, such as a bar-coded format, and even comprise a combination of various representation formats.

The vehicle (3) is also provided with a second support (2) that bears up (or have access to) a non-visible identification code (ID2) of said vehicle. Namely, although a discrete element appears to be depicted in Fig.1 for said support (2), it can comprise a set of two or more interconnected discrete devices.
Thus, for example, it can comprise a card which contains the non-visible identification code (ID2), and a card-reader apparatus arranged to lodge (or to be connected to) said card and interwork with it. The card can be a magnetic-coded card (such as a credit card), or be an smart card (such as, or similar to, a SIM card of a mobile phone). Smart cards are normally tamper-resistant, thus avoiding an easy manipulation of the data they contain, and they merge processing means and storage means within the same package. The card-reader apparatus and the card can communicate via direct contact, short range magnetic coupling, short range radio, etc..
Alternatively, the support (2) can comprise a discrete apparatus having storage means (e.g.: a memory chip, a magnetic based memory, a set of micro-switches, etc.) to store a code.

The support (2), either: discrete, or assembly of card-reader/card, comprise a transmitter (TX) arranged to generate a signal (8) which contains information of the stored non-visible identification code (ID2), and which is suitable to be read by the second reader (5). Said signal (8) can be, for example, an electromagnetic signal modulated in such a way so as to contain information of the stored identification code (ID2). The band of the electromagnetic spectrum in which said signal (8) is transmitted can vary depending on implementation details which, for example, can deal with the suitability of a specific band for a specific environment conditions in order to maximize the effective range of said signal on said specific conditions. Thus the signal (8) can be transmitted in the radio band, or in the microwave band, visible band, infrared band, etc..

Various techniques can be used to embed information of the non-visible identification code (ID2) within a signal (8). For example, said code can be transmitted by pulses, wherein, for example, a given sequence of pulses represents a given character of the code or a given bit or sequence of bits of its binary representation. If the signal (8) is, for example, transmitted via radio or microwave, a binary representation of the non-visible code (ID2) can be transmitted by using any of various modulation techniques, such as: FSK (Frequency Shift Keying), PSK (Phase Shift Keying), DPSK (Differential PSK), QPSK (Quadrature PSK), QAM (Quadrature Amplitude Modulation), etc., so as to produce a modulated signal (8) over a carrier frequency in the selected electromagnetic band which contains information of said code (ID2).

As an example case, the identification system of Fig.1 can be assumed to show an identification station comprising: a first identification reader (4), a second identification reader (5), a processor (6), storage means (7) accessible to said processor and, optionally, an output device (9).

An identification station advantageously comprises also a detector (not shown in Fig.1) for detecting the pass of a vehicle and triggering the operation of a reader (4, 5). The detector can comprise detection means based on well-known presence/pass detection technologies, such as infrared beams, magnetic loops, radar signals, acoustic signals, etc.. In one embodiment, the detector can be connected to the processor (6), so as the processing means (PROC) in said processor (6) trigger the operation of the first reader (4) and the second reader (5) upon reception of a detection signal received from the detector. Alternatively, a detector can be connected to each reader (4, 5), or to both readers, which trigger their operation.

When the vehicle (3) passes near the identification station, the first reader (4) captures an image of said vehicle. The first reader is preferably arranged to capture images of a vehicle such as a captured image comprises, at least, the support (1) (or the part of it) that displays the visible identification code (ID1) of said vehicle. For this purpose, the first reader (4) can comprise a video camera (CAM) recording video images continuously or discontinuously (e.g.: upon detection of a vehicle), or (alternatively or additionally) comprise a camera (CAM) which takes pictures of a passing vehicle.

According to an alternative implementation, wherein (as depicted in Fig.1) the first identification reader (4) comprises means (OCR) to perform an optical character recognition of one or more characters comprised within a captured image; a binary representation of the OCR-obtained visible identification code (ID1) can be transmitted to the processor (6).
OCR means are usually accomplished by processing means executing an specialized software for character recognition; this software being arranged to use a digital image as an input, and to produce a binary file containing a digital representation of the recognized characters (e.g.: as in an electronic text file). An example of said specialized software is "*Clara OCR"* (available at http://www.claraocr.org/).

Alternatively, said OCR means can be allocated within said processor (6); being then the information transmitted by the first reader (4), for example, a binary file containing the digitized image (e.g.: a "bitmap" file, a "JPEG" file, a "tiff" file etc.).

Also, when the vehicle (3) passes near the identification station, the second reader (5) receives a signal (8), emitted by the transmitter (TX) in the second support (2) of the vehicle, that, as described previously, contains information of the non-visible identification code (ID-2). The second reader (5) comprises a receiver (RX) which is arranged to receive a signal (8) of the same nature as the one emitted by the transmitter (TX), and to extract the information of the non-visible identification code (ID2) from the received signal (8). Accordingly, the receiver (RX) in the second reader (5) performs the reverse conversion operation to the one performed by the transmitter (TX) in the support (2); namely, it decodes/demodulates the received signal (8) so as to extract from it a digital representation of the non-visible identification code (ID2) ready to be delivered to the processor (6).

In an alternative implementation, the transmitter in the vehicle (TX) is arranged to continuously emit the signal (8), for example, by an electromagnetic radiation. In a another alternative implementation, the support of the non-visible identification code on the vehicle (2) comprises a transponder (TX) arranged to emit said signal only upon reception of a predetermined interrogating signal in said transponder. In this case, the interrogating signal could be generated by a beacon in the identification station, that could be, for example, located within the second reader (5), or be an stand alone element (not shown in Fig.1). The transponder (TX) can be arranged to comprise, a power rectifying unit, an oscillator and a variable antenna loading circuit; so as to, at reception of an interrogating signal, to perform a backscatter modulation of said signal according to the non-visible identification code stored (ID2), so as to produce back a reflected signal (8) that would be received in the receiver (RX) of the second reader (5).

Once both readers (4, 5) have captured, respectively, the first identification code (ID1) and the second identification code (ID2) of a vehicle (3), said codes are transmitted to the processor (6).

The communication between the readers (4, 5) and the processor (6) can be accomplished by various implementation alternatives depending on the specific physical architecture used to implement the vehicle identification system. Thus, if both identification readers (4, 5) are discrete devices, they can be connected to the processor (6) by means of, for example, a serial or parallel data bus, using standardized serial or parallel interfaces (such as RS-323, RS-422 or IEEE-1284). If, for example, any (or both) of the readers is (are) integrated within the same computer arrangement with the processor (6), then the communication can be accomplished by means of internal data bus(es) (as usually peripheral I/O devices are connected in integrated computer arrangements).

According to an advantageous embodiment, both readers sent its acquired identification codes (ID1, ID2) tagged so as to allow the processing means (PROC) in said processor (6) to distinguish them. In particular, a well-known TLV (*tag-length-value*) technique can be used for identifying the type of obtained identification code to the processor (6); wherein the *tag* field indicates if the information sent is a visible first identification code type (ID1) or a non-visible second identification code type (ID2), the *length* field express the length of the information sent, and the *value* field conveys the obtained identification code (or the content of a binary file containing the digitized image, in case of a first visible identification code if the first identification reader 4 does not comprise OCR means).

Given that the acquisition time in both identification readers (4, 5) can be different, the processing means (PROC) in the processor (6) can start a timer of a given value. Said timer would be started when an obtained identification code is received from one reader, until the reception of the corresponding other one. Advantageously the value of this acquisition timer is adjusted so as to avoid the mixing of identification codes of different vehicles passing by the identification station. Thus, at time-out of the acquisition timer, the missing identification code (ID1, ID2), can be considered as not-present for this vehicle (3) and, for the further comparison that will take place against the data stored in the storage means (7), a predefined default value can be assigned to the missing identification code.
Alternatively, if as mentioned earlier, a detector is connected to the processor (6), so as the processing means (PROC) in this processor are alerted of the presence of a near vehicle (3), then the acquisition timer can be started upon reception of said alert from the presence detector. Alternatively, if as mentioned earlier, a detector is connected to each identification reader (4, 5) (or a detector is connected to both readers), any (or both) of said readers can start an acquisition timer for obtaining its respective information (i.e.: the identification code they are arranged to obtain); then, at time-out of said timer, a predefined default value can be sent to the processor (6) in replacement of the missed identification code (ID1, ID2).

In case of missing one identification code, the operation can continue, as will be later detailed. However, in case a vehicle (3) is detected and none of their identification codes (ID1, ID2) are obtained, then the processing means (PROC) can, for example, issue an alarm indicating this event trough any of the output peripherals (9) that can be connected to the processor (6).

When both identification codes (ID1, ID2) are available to the processor (6) (including the case of one of them being missing), the processing means (PROC) in said processor compare them with the ones (ID1', ID2') previously stored in the storage means (7) and obtain a comparison result (RES).
Technical details to accomplish said comparison closely relate to the alternative physical implementation of said processor (6) and said storage means (7) (i.e.: if they are allocated within the same computer arrangement or in different computer arrangements), as well as to details concerning the storage disposition of said stored identification codes (ID1', ID2').

For example, the storage means (7) can belong to the same computer arrangement as the processing means (PROC); such as a PC (personal computer) having processing means (PROC) and memory means (7). In this case, the comparison is accomplished by accessing the content of the memory in said PC and obtaining a matching or not-matching result (RES).

Alternatively, the storage means (7) can be implemented within the memory of another computer machine (7). In this case, both the processor (6) and said another computer machine (7) can communicate via well-known protocols through a data connection established among them. For example, both can be connected by means of a serial or parallel interface, or be connected to a LAN (Local Area Network), such as an Ethernet or Token-Ring LAN, or a WAN (Wide Area Network), and use a common well-known transport-protocol/network-protocol stack infrastructure for communicating. An example of a transport-protocol/network-protocol infrastructure is the one achieved using TCP/IP (*"Transmission Control Protocol"* over "*Internet Protocol*") protocol stack, or UDP/IP (*"User Datagram Protocol*" over "*Internet Protocol*") protocol stack. In a common TCP/IP or UDP/IP communication infrastructure, application processes belonging to the processing means in both machines (6, 7) can, smoothly, communicate remotely regardless the low layer characteristics of the physical connection topology (i.e.: if LAN, WAN, etc.), by using the communication services provided by the TCP/IP or UDP/IP protocol stack on the respective machine where they reside.
Thus, in this case, a query could be sent from 6 to 7 that comprises both obtained identification codes (ID1, ID2), and a result (RES) sent back from 7 to 6 with the matching or not-matching result of the comparison. Should the value of one of the identification codes being missing (i.e.: it could not be obtained from the corresponding identification reader, or a time-out occur while waiting it), a predefined default value can be sent within the query in replacement, so as to indicate its absence.

Regardless implementation details concerning the allocation of the storage means (7) and the methods and means to access them; said storage means (7) contains a plurality of data registers, each comprising a concatenation of a first identification code (ID1') and a second identification code (ID2') legally assigned to a vehicle (3). Said concatenation can also be accomplished according to further implementation details.
Thus, for example, a memory cell in the storage means (e.g.: a part of the memory having a certain number of bytes) can store both identification codes (ID1' ,ID2'), either, directly concatenated, or separated by a predefined separation character (e.g.: "#"); or store one of them (ID1' or ID2') and a pointer that links it to another memory cell that stores the other one (ID2' or ID1'). In this latest case, the relationship between corresponding stored identification codes can be accomplished by a single link from one of them to the other one (e.g.: ID1'->ID2'), or by a double link between them (i.e: ID1'->ID2' and ID2'->ID1').
Also, to be used in alternative embodiments later described, a predefined default value can be assigned to the corresponding identification codes in those data registers containing only one of said identification codes (ID1' or ID2') (e.g.: for a vehicle whose second identification code is unknown, or not existing).

The comparison can then be accomplished accordingly to the aforementioned storage related details.
Namely, if the stored identification codes (ID1', ID2') are directly concatenated, then, a the obtained identification codes (ID1, ID2) are, first directly concatenated, and then compared with the stored data registers.
Otherwise, if the identification codes (ID1', ID2') are stored separated by a predefined separation character, then the obtained identification codes (ID1, ID2) are, first arranged accordingly (e.g.: "ID1#ID2"), and then compared with the content of the stored data registers.
Otherwise, if, for example, a first identification stored code (e.g.: ID1') stores its value together with a pointer to the corresponding second identification stored code (e.g.: ID2'), then a first identification obtained code (e.g.: ID1) is first compared with the content of the data registers which stores values of said first identification codes (ID1'), and then, if a match is found, with the corresponding second stored identification code (ID2'). In case of double linking between corresponding stored identification codes (ID1' ID2'), if no match is found in a first look-up cycle using, for example, an obtained first identification code (ID1), then a second look-up cycle using the obtained second identification code (ID2) can be performed; thus, the not-matching condition is finally determined if no match has been found in both look-up cycles.

It could happen that not all vehicles carries a non-visible (but remotely readable) identification code (ID2). Also, it can be difficult to store a sufficiently great number of data registers so as to match all possible vehicles detected in a vehicle identification system. Even more, it could happen that a given identification code present in a vehicle have been missed by the corresponding reader, or not received in time.
Thus, various advantageous embodiments shall hereinafter be described which can be implemented to cover these situations.

The aforementioned double linking between concatenated stored identification codes (i.e: ID1'->ID2' and ID2'->ID1'); as well as the also aforementioned assignment of default values to both: a missing stored identification code (having a non-missing corresponding stored identification code), and to a missed obtained identification code (having a non-missing corresponding obtained identification code); can advantageously be used for these purposes.

For example, in case of one missed identification code obtained from a vehicle (3) (e.g.: ["*123ABC*","*missingID2*"], or ["*missingID1*","*7$F*5A43*"]), and if the stored information in the storage means matches the obtained information, the comparison can be considered as passed successfully, an its result (RES) can indicate this event (e.g.: "vehicle OK"); since, in this case, there is a full matching in the comparison (same as if both codes would have been obtained, and fully correspond to non-default value stored identification codes). As an option, the comparison result (RES) can contain an indication of the missed read and stored identification code (e.g.: "ID1 is missing", or "ID2 is missing").

A similar successful comparison result (RES) (e.g.: "vehicle OK") can be given in cases wherein one of the obtained identification codes is missing (e.g.:ID1), and the other obtained identification code (e.g.: ID2) matches with one stored identification code (e.g.: ID2') which is concatenated with a corresponding stored identification code (e.g.: ID1') having a non-default value assigned. As an option, the comparison result (RES) can contain an indication of the missed identification code (e.g.: "ID1 not read", or "ID2 not read").
This, as in any other successfully comparison case, does not precludes, that further actions are taken according to the known-art, wherein a given data register in the storage means (7) comprises additional information related to stolen vehicles, authorized vehicles pass control, etc.. In these cases, if, at least, one identification code is found as matching, said further actions can take place according to said stored additional information.

For cases wherein both identification codes (ID1, ID2) are obtained from the vehicle (3), the comparison result (RES) can be obtained as follows.
For example, the obtained first identification code (ID1) can be compared first with the plurality of stored first identification codes (ID1') until a match is found. If a match is found, then the content of the corresponding concatenated stored second identification code (ID2') is checked: if it is empty (i.e.: has the aforementioned predefined "default value"), this can be considered as a non-matching situation; thus a comparison result (RES) (e.g.: "vehicle NOT OK") indicating this event should be produced. This could be a similar case as when both identification codes (ID1, ID2) are obtained and only one of them matches; namely, the visible first identification code of the vehicle (3) can have been altered or replaced by other one.
A similar process can take place if, for example, the obtained second identification code (ID2) is compared first with a plurality of stored second identification codes (ID2').

In summary, the result of the comparison (RES) yields information on if the obtained pair of identification codes (ID1, ID2) in a vehicle (3), are the ones they should be (ID1', ID2').
Namely, taking advantage of the non-visible condition of the second identification code (ID2), any malicious change or modification made over the visible first identification code (ID1), such as a replacement of the vehicle's license plate(s) (or any other support for the target visible identification code) in a stolen vehicle, is automatically detected.
Similarly, any non-malicious alteration of the visible first identification code (ID1) due, for example, to a deterioration of the characters in the vehicle's license plate (or any other support for the target visible identification code), can equally be detected.

Once the result of the comparison (RES) is available to the processor (6), the processing means (PROC) in said processor can produce an alarm (ALM) signal.

The terms "alarm" (or "alarm signal") used in this document, shall not be understood as compelling the generation of an audible and/or visible alarm. Although advantageously an audible and/or visible warning is given in case of a non successful ("vehicle NOT OK") comparison result (RES), or in cases wherein one of the first or second identification codes is missing ("ID1 is missing", "ID2 is missing") or could not be read ("ID1 not read", "ID2 not read"). Instead, the alarm can comprise various procedures that can range from the mere recording of the event (e.g.: storage of information in a log file comprising, among other data such as the vehicle's identification code(s), a time-stamp of the time where the event took place), to the sending of a signal or message (alarm signal) to one output device (9), or to a plurality of them (9), that, in turn, can be arranged to generate an audible and/or visible warning so as to alert of the event at reception of said message or signal.

Additionally, a classification of the result (RES) of the comparison can be performed, so as to perform further actions according to said result (RES). Thus, for example, having a plurality of output devices (9), each arranged to generate an audible and/or visible warning, a message or a signal can be sent to the corresponding output device (9), or to more than one, according to the result (RES).
For example, in case of a non successful comparison result, a simple signal (e.g.: an electrical pulse) can be sent to an output device (9) which is arranged to produce a simple visible and/or audible alarm. Alternatively, or in addition to it, a message containing, for example, a code preassigned to the result of the comparison (e.g.: "402") or an equivalent text (e.g.: "Vehicle NOT OK", "ID1 not read", etc.), and which can also comprise the obtained and/or stored identification code(s), can be sent to an output device (9) which can be arranged to display said information to, for example, an operator in charge of the identification station.

Reference is now made to Fig.2 to illustrate an embodiment of the invention, wherein the vehicle identification system comprises a plurality of identification stations. The system of Fig.2 comprises: a central processor (62), a database (7), and a plurality of identification stations (IS1, IS2, ISn).

In this embodiment, the previously described functions related to the processor (6) and its processing means (PROC), are now distributed between: a plurality of local processor (61), each in an identification station (IS1, IS2, ISn) and having each local processing means (LP); and a central processor (62) having central processing means (CP); wherein each of said local processors (61) is connected to said central processor (62). Said distribution is summarized next.

The functions described heretofore as performed by the processor (6) and its processing means (PROC) which related to communication functions with the first and second identification readers (4, 5), are implemented in this embodiment by a local processor (61) and its local processing means (LP). Additionally, and as will be later described, LP can also be entitled to perform subsequent actions upon the comparison result (RES) as described previously with reference to Fig.1. Besides, the local processing means (LP) in a local processor (61) can implement the aforementioned acquisition timer and, additionally or independently of this, assign a default value to a missing identification code (ID1, ID2) that could not be obtained. Also, the local processor (61) in an identification station (IS1, IS2 or ISn) can be in communication with a presence detector (not shown in Fig.2) for accomplishing with the same functions early mentioned with reference to Fig.1.

The remaining functions described heretofore as performed by the processor (6) and its processing means (PROC); namely, the comparison of the obtained first and second identification codes (ID1, ID2) with the identification codes previously stored (ID1', ID2'), and the subsequent actions; are implemented in this embodiment by a central processor (62) and its central processing means (CP). Additionally, and as will be later described, CP can also be perform subsequent actions upon the comparison result (RES). Also, an output device (9) can be connected to the central processor (62) having a similar functionality as the one described earlier with reference to Fig.1.

The database (7) contains the storage means (7) as described previously with reference to Fig.1, and it is accessible to said central processor (62). Namely, as described earlier with reference with the processor (6) and the storage means (7) of Fig.1, the database (7) can belong to the same computer arrangement as the central processing means (CP), so as this database (7) dwells in the memory means of a computer arrangement (62), or, alternatively reside in the memory means of a further stand-alone computer arrangement (7). Also, the structure of the data stored in the database (7), concerning storage and concatenation of the plurality of identification codes it stores (ID1', ID2'), can be accomplished according to any of the already mentioned implementation alternatives.

Each identification station (IS1, IS2, ISn) can be located in a different geographic location (GL1, GL2, GLn) and comprises a first identification reader (4), a second identification reader (5) and a local processor (61) as described heretofore, and optionally, an output device (9) having a similar functionality as the one described earlier with reference to Fig.1.

As shown in Fig.2, the local processor (61) of each identification station (IS1, IS2, ISn) is connected to the central processor (62) by means of a communication link (10). The connection between a local processor (61) and the central processor (62), so as to provide communication (referred hereinafter as "remote communication") between the local processing means (LP) in said local processor (61) and the central processing means (CP) in said central processor (62), can be accomplished by different techniques (which are well-known for those skilled in the art), which can use the communication services offered by current telecommunication networks.
Thus, the depicted communication links (10) should not be understood as being implemented by point-to-point communication lines (although this possibility can also be considered); instead, each depicted line is an abstraction to illustrate communication links that, for their respective achievement, can comprise the existence and interworking of a plurality of end-user elements (e.g.: data adapters, modems, etc) and network elements (e.g.: telecommunication nodes, gateways, telecommunication servers, etc.) which, for the sake of a greater simplicity, are not shown in Fig.2.
Some examples to establish said remote communication through existing telecommunication networks will now be cited.

For example, the remote communication can be achieved through a telecommunication network which offers data transmission services using a circuit-switched oriented technology, such as: PSTN (Public Switched Telephone Network), ISDN (Integrated Services Digital Network), a cellular network such as GSM (Global System for Mobile communications), or UMTS (Universal Mobile Telecommunications System). In this case, a modem is connected to the local processor (61) and another one to the central processor (62), being both modems connected to the same network; although, since these telecommunication networks are usually inter-connected, each one of these processors (61, 62) can be connected to a different one. The connection can, either: be permanently established, or be established semi-permanently (e.g.: when a identification code of a vehicle is obtained, at certain hours, etc.); by "dialling" the identifier (e.g.: a traditional "telephone number" having a format such as described in ITU-T Recommendation E.164) of the counterpart from any of said processors (61, 62).

For example, the remote communication can be achieved through other telecommunication networks which offer data transmission services using native packet-switched oriented technology, such as: a LAN (Local Area Network), or WAN (Wide Area Network), or a cellular system providing packet-switched technology (such as a GSM network having GPRS - General Packet Radio Service-, or an UMTS network). In this case, the addressing between processors (61, 62) can be accomplished using their respective IP-addresses (Internet Protocol addresses), or knowing their "names" (e.g.: a server name having an *URL* -Uniform Resource Locator-format) and using a name-to-address translation service such as the one provided by *DNS* (Domain Name System).

Also, given that nowadays there are provided gateways that allow interconnection of circuit-switched oriented networks and packet-switched oriented networks, it is possible to have, for example, the central processor (62) connected to a LAN, and, for example, a local processor (61) connected to PSTN. In this case, the address of a gateway which is connected to said LAN and to said PSTN needs to be used for establishing the respective communication paths through said networks.

It shall be understood that the plurality local processors (61) can be connected each to a different telecommunication network. Accordingly, the central processor (62) can also be connected to more than one telecommunication network (i.e.: having central processing means CP further adapted to communicate using various techniques). Alternatively, the central processor (62) could be connected to only one network (e.g.: a LAN) and be connected to further networks via gateways (as mentioned above).
In an advantageous embodiment, a local processor (61) in an identification station (IS1, IS2, ISn) uses a cellular network (such as GSM, or UMTS) to communicate with the central processor (62); thus easing to place identification stations in geographical areas where a wired connection to another telecommunication network is either, not available, or difficult to achieve.

In any of the example cases cited above, TCP/IP and/or UDP/IP can be advantageously used to allow communication between the local processing means (LP) in a local processor (61) and the central processing means (CP) in the central processor (62); since these communication stacks provide, not only communication services through native packet-switched oriented networks, but also through circuit-switched networks.
When TCP/IP or UDP/IP are used to communicate between remote processors (e.g.: 61, 62), according to the known-art, one or a set of *IP-packets* are sent that conveys *messages* in either direction, so as to provide a dialog between the processing means (LP, CP) in each processor, or a mere unidirectional exchange of information. The format of the messages can be arranged using the aforementioned TLV (tag-length-value) technique; which facilitates, not only the identification of a message-type (e.g.: by a message-type identifier contained in the "tag"), but also an to structure and identify its content, since it allows the nesting of contents (i.e.: a "value" field can further contain data structured also according to TLV).

The overall operation of the system shown in Fig.2 shall now be described.

When a vehicle passes by an identification station (e.g.: IS2), the local processing means (LP) obtains the identification codes (ID1, ID2) of said vehicle, as recited earlier. Then the local processing means (LP) sends a message (M1) towards the central processor (62) which contains said identification codes (ID1, ID2). Preferably, the obtained identification codes (ID1, ID2) sent in said message are arranged with a TLV technique.
The sent message (M1) could be, for example:
[ A {1 {*123ABCD*} 2{*7$F*5A43*}} ]
wherein, for example: the identifier "A" is the message-type identifier, that in this case could mean *"vehicle identified;* "1" and "2" be the identifiers of, respectively, the first identification code read (ID1) and the second identification code read (ID2); and "*123ABCD*" and "*7$F*5A43*", respectively, the obtained first (ID1) and second identification (ID2) codes.

If one of the identification codes could not be obtained, a default value can be placed in replacement. However, according to an alternative embodiment, in case of a missing identification code, the message (M1) can contain only the obtained one; namely, if, for example, ID2 has been missed, in the example above, the message sent could be:
[ A {1 {*123ABCD*} } ]

According to an advantageous embodiment, the local processing means (LP) can be further arranged to send additional information in a message M1.

For example, this additional information can comprise an identifier which uniquely identifies the sending identification station (e.g.: "IS2"), and, additionally or alternatively, an identifier of the geographic location in which the identification station is located (e.g.: "GL2").
The identifier of the geographic location can be preprogrammed in the local processing means (LP), and it can contain, for example, a name assigned to the corresponding area, or geographical coordinates. Alternatively said identifier of the geographic location can be dynamically obtained from a location peripheral connected to the local processor (61), such as a GPS (Global Positioning System) receiver; thus allowing to move said local processor (61) or the whole elements of the identification station (IS1, IS2, ISn) from one area to another one without changing its location data.
Besides, in the case of static identification stations (i.e.: permanently situated in a given area), the identifier of the identification station (e.g.: "IS2") can be further used (e.g.: by the central processing means CP in the central processor 62) to obtain its geographical location (e.g.: by means of a look-up table storing relationships between identification station identifiers and their corresponding geographical location).

Thus, considering the example case cited above for the message M1, and assuming, as example, that geographical coordinates are sent as geographical information, said message M1 could be:
[ A {1 {*123ABCD*} 2{*7$F*5A43*} 3{*360140N-011439W*}} ]
wherein, for example: the identifiers "A", "1" and "2" would have the same meaning as described above, and the identifier "3" would indicate that geographical coordinates are sent; that, within the example case could represent: 36°01'40"N and 01°14'39W.

Also, given that one message (M1) can be generated for each passing vehicle (3), the additional information sent in the message M1 can advantageously comprise an own individual message reference in order to distinguish an each message (M1) sent from the same identification station from each other. This message reference is useful when, according to an alternative embodiment, a further answer message (M2) can be received as a response, in order to distinguish it from other answer messages and to correlate it with the corresponding message (M1) that was previously sent, as will be later cited. Thus, in this case, the local processing means (LP) in the local processor (61) can keep a table which relate the content of the identification codes (ID1, ID2) of a vehicle (3) with the message reference identifier sent in the message (M1) that conveyed them.

Thus, following with the example case of above, the message could be:
[ A {1 {*123ABCD*} 2{*7$F*5A43*} 4{*09135127*}} ]
wherein, for example, the identifier "4" would label the content of the individual message reference (e.g.: "*90135127*") of this message. Alternatively, this message reference can consist (or comprise) a time-stamp having an adequate precision (e.g.: in milliseconds) obtained from a clock element accessible to the local processor (LP).

When the message (M1) arrives to the central processor (62), the central processing means (CP) extract the identification codes (ID1, ID2) that said message contains. According to an alternative embodiment, if one identification code is missing, the central processing means (CP) can be further arranged to replace it by a predefined default value that, as mentioned earlier, can facilitate the subsequent comparison.

Next, as mentioned earlier with reference to Fig.1, the received identification codes (ID1, ID2) are checked against the content of the database (7), and a result (RES) of the comparison is obtained. According to said result (RES), an alarm signal (ALM) can be sent towards an output device (9) which can be connected to the central processor (62); wherein the various embodiments described earlier in relationship with the obtained result (RES), equally apply here. Alternatively or additionally, the alarm signal can be generated by the identification station from which the message was sent, as will be described.

The central processing means (CP) on said central processor (62) can be further arranged to send back an answer message (M2) which contains the result (RES) of the comparison towards the local processor (61). Although, as an implementation option, answer messages (M2) could only be sent if the result of the comparison (RES) is not fully successful.

The answer message (M2) can convey also the individual message reference cited above; namely, if it was received in the previous message (M1) to which this answer message corresponds. As an alternative implementation, particularly advantageous in case that message references (and their related data) are not kept in the local processor (61), the answer message (M2) can further comprise the identification code(s) that were received in the previous corresponding message (M1). This, which can be redundant in case that the message reference is sent back in M2, can be useful to verify the integrity of the response. Also, in case of the message M1 contains a missing identification code (or also, in case of unsuccessful comparison), the answer message (M2) can further comprise the corresponding identification code(s) stored in the database (7).

Similar TLV tagging techniques can be used for the data conveyed in the answer message (M2) as the ones previously described. Thus, the answer message could be:
[ B {5 {*0*} } ]
wherein, for example, label identifier "B" is the message-type identifier, that in this case could mean *"vehicle checked",* and "5" the label identifier for the result (RES), wherein, the value "0" could mean "vehicle OK".

When the message (M2) arrives to the local processor (61), the local processing means (LP) extract the result (RES) that said message contains. As mentioned above, the local processing means (LP) can identify the vehicle's identification codes (ID1, ID2) said answer message relates to by comparing the message reference received with the ones stored. Also, as the answer message (M2) can provide back said identification codes (ID1, ID2), they can be obtained from said message, which can, additionally, be used to check the integrity of said message in case they are received together with the message reference.
Then, according to the received result (RES), an alarm signal (ALM) can be sent from the local processing means (LP) towards an output device (9) connected to the local processor (61); wherein the embodiments described earlier in relationship with the further actions according to the obtained result (RES), equally apply here.

## Claims

1. An system for identification of a vehicle (3),
comprising:
- a first identification reader (4), arranged to obtain a visible first identification code (ID1) from a first identification support means (1), said first identification support means, arranged to display on said vehicle said first identification code;
**characterized in that** it further comprises:
- a second identification reader (5), arranged to obtain a non-visible second identification code (ID2) from a second identification support means (2), said second identification support means (2), arranged to bear up on said vehicle said second identification code;
- storage means (7), arranged to store a first and a second identification codes (ID1',ID2') assigned to said vehicle; and
- processing means (PROC), arranged to compare said obtained first and second identification codes (ID1,ID2) with said stored first and second identification codes (ID1',ID2').

2. The system of claim 1, wherein said first identification reader (4) is arranged to obtain at least an image of said first identification support means (1); further comprising an optical character recognizer (OCR), arranged to obtain said first identification code (ID1) from said image.

3. The system of claim 1, wherein said second identification support means (2) comprise a transmitter (TX) arranged to transmit an electromagnetic signal (8) containing information of said second identification code (ID2); and, wherein said second identification reader (5) comprises a receiver (RX) arranged to receive said signal and to obtain said second identification code from it.

4. The system of any of preceding claims, further
comprising:
- a central processor (62);
- a database (7) accessible to said central processor and storing, at least, a first and a second identification codes (ID1',ID2') assigned to said vehicle (3); and
- a plurality of identification stations (IS1,IS2,ISn), each having: a said first identification reader (4) and a said second identification reader (5), connected to a local processor (61);
wherein, said processing means (PROC) further comprise:
- local processing means (LP) in each of said local processor (61), arranged to communicate with the first and second local identification readers (4,5) of an identification station (IS1,IS2,ISn) to obtain a said first identification code (ID1) and a said second identification code (ID2) of a vehicle (3), and to send a message (M1) containing, at least, said obtained first and second identification codes (ID1,ID2) to said central processor (62); and
- central processing means (CP) in said central processor (62), arranged to receive a message (M1) containing a first and second identification codes (ID1,ID2), and further query said database (7) to compare said received first and second identification codes (ID1,ID2) with said stored first and second identification codes (ID1',ID2').

5. The system of claim 4, wherein said message (M1) further
comprises one, or any combination thereof, among:
- an identifier of the identification station (IS1,IS2,ISn);
- geographical information related to the location of the identification station (GL1,GL2,GLn);
- an individual message reference.

6. The system of claims 4 or 5, wherein said central processing means (CP) in said central processor (62) are further arranged to send a response message (M2) containing the result (RES) of the comparison to the local processor (61) that sent the message (M1).

7. The system of any of preceding claims, wherein said processing means (PROC,CP,LP) are further arranged to produce an alarm (ALM) if said obtained first and second identification codes (ID1,ID2) does not match with said stored first and second identification codes (ID1',ID2').

8. A method to identify a vehicle (3); said vehicle carrying a visible first identification code (ID1), and a non-visible second identification code (ID2);
**characterized in that** it comprises the steps of
a) storing a first and a second identification codes assigned to said vehicle (ID1',ID2');
b) obtaining from said vehicle its first identification code (ID1);
c) obtaining from said vehicle its second identification code (ID2); and
d) comparing said obtained first and second identification codes (ID1,ID2) with said stored first and second identification codes (ID1',ID2').

9. The method of claim 8, wherein:
the step b) further comprises the steps of:
b1) obtaining, at least, an image of said first identification code, and
b2) obtaining said first identification code (ID1) by optical character recognition (OCR) on said image.

10. The method of claim 8, wherein:
the step c) further comprises the steps of:
c1) receiving an electromagnetic signal (8) containing said second identification code, and
c2) obtaining said second identification code (ID2) from said signal.

11. The method of any of claims 8 to 10, further comprising the step of:
e) generating an alarm (ALM) if said obtained first and second identification codes (ID1,ID2) does not match with said stored first and second identification codes (ID1',ID2').
